# EUROPÄISCHE PATENTANMELDUNG

(11) **EP 4 631 767 A1**
(43) Veröffentlichungstag der Anmeldung: **15.10.2025**
(21) Anmeldenummer: 25169811.4
(22) Anmeldetag: 10.04.2025
(51) Int. Cl.: B60L 3/00, B60L 3/04, B60L 3/12, B60L 53/14, B60L 53/18, B60L 53/30, B60L 53/62, B60L 53/66, B60L 58/15, H02J 7/00, B60L 55/00, B60L 53/10

(54) **VERFAHREN ZUM BETREIBEN EINER ELEKTRISCHEN LEISTUNGSVERSORGUNGSVORRICHTUNG, ABSCHALTSTEUERVORRICHTUNG, ABSCHALTEINRICHTUNG, UND LEISTUNGSVERSORGUNGSVORRICHTUNG**

(30) Priorität: 11.04.2024 DE 102024110209
(71) Anmelder: ads-tec Energy GmbH, 72622 Nürtingen (DE)
(72) Erfinder: DREHER, Holger, 71088 Holzgerlingen (DE); OCHS, Holger, 71159 Mötzingen (DE); NEUMANN, Angelika, 76137 Karlsruhe (DE); ZIEGLER, Daniel, 72762 Reutlingen (DE)
(74) Vertreter: Gleiss Große Schrell und Partner mbB

(57) **Zusammenfassung**

Die Erfindung betrifft ein Verfahren zum Betreiben einer elektrischen Leistungsversorgungsvorrichtung (1) zum uni- oder bidirektionalen Laden einer Energiespeichervorrichtung (2), wobei
- während eines Ladevorgangs Daten einer Datenübertragung zwischen der Leistungsversorgungsvorrichtung (1) und der Energiespeichervorrichtung (2) empfangen werden, wobei die Daten zumindest einen für den Ladevorgang charakteristischen Grenz-Ladeparameter enthalten, wobei
- abhängig von dem zumindest einen Grenz-Ladeparameter eine Ist-Notabschaltschwelle der Leistungsversorgungsvorrichtung (1) für einen Ladeparameter gesetzt wird, wobei
- wenn der Ladeparameter die Ist-Notabschaltschwelle überschreitet, eine Notfallmaßnahme durchgeführt wird, um die Leistungsversorgungsvorrichtung (1) und/oder die Energiespeichervorrichtung (2) vor einer Beschädigung zu schützen.

Außerdem betrifft die Erfindung eine Abschaltsteuervorrichtung (5) zur Durchführung eines solchen Verfahrens, eine Abschalteinrichtung mit einer solchen Abschaltsteuervorrichtung (5) und eine Leistungsversorgungsvorrichtung (1) mit einer solchen Abschaltsteuervorrichtung (5) und/oder einer solchen Abschalteinrichtung.

## Beschreibung

Die Erfindung betrifft ein Verfahren zum Betreiben einer elektrischen Leistungsversorgungsvorrichtung zum uni- oder bidirektionalen Laden insbesondere einer Energiespeichervorrichtung, eine Abschaltsteuervorrichtung, eine Abschalteinrichtung, und eine Leistungsversorgungsvorrichtung.

Beim Laden einer Energiespeichervorrichtung, insbesondere eines Elektrofahrzeugs, mittels einer Leistungsversorgungsvorrichtung ist es notwendig zu gewährleisten, dass eine maximale Ladestromstärke und/oder eine maximale Ladespannung nicht überschritten wird, um eine Beschädigung der Energiespeichervorrichtung und/oder der Leistungsversorgungsvorrichtung zu verhindern. Insbesondere ist zu gewährleisten, dass bei einer Fehlfunktion der Leistungsversorgungsvorrichtung und/oder der elektrischen Energiespeichervorrichtung eine elektrische Verbindung, insbesondere ein Leistungsstromkreis, unterbrochen wird.

Es ist bekannt, dass Elektrofahrzeuge eine Sicherung aufweisen, die im Falle einer Fehlfunktion der Leistungsversorgungsvorrichtung den Leistungsstromkreis unterbrechen. Kommt es beispielsweise während eines bidirektionalen Ladevorgangs - wenn das Elektrofahrzeug elektrische Energie an die Leistungsversorgungsvorrichtung überträgt - zu einem Kurzschluss in der Leistungsversorgungsvorrichtung, überträgt das Elektrofahrzeug Energie mit einer derart hohen Leistung an die Leistungsversorgungsvorrichtung, dass die Sicherung des Elektrofahrzeugs auslöst. Nachteilig an diesen Sicherungen ist, dass diese beim Öffnen unter einer hohen Stromlast bereits nach wenigen Schaltvorgängen ausgetauscht werden müssen oder sogar beim ersten Ansprechen zerstört werden. Solche Sicherungen können ferner in eine Batterie des Elektrofahrzeugs integriert sein und schlimmstenfalls auch die Batterie beschädigen, wenn sie ansprechen. Das Elektrofahrzeug ist nach dem Auslösen der Sicherung nicht mehr funktionsfähig Zur Wiederherstellung der Funktionsfähigkeit des Elektrofahrzeugs muss das Elektrofahrzeug abgeschleppt und die Sicherung ausgetauscht und/oder manuell aktiviert werden. Alternativ muss nach dem Auslösen der Sicherung die gesamte Batterie ausgetauscht werden.

Weiterhin ist bekannt, dass die Leistungsversorgungsvorrichtungen Schmelzsicherungen aufweisen können. Die Schmelzsicherungen sind eingerichtet, um den Leistungsstromkreis bei einer Fehlfunktion der Leistungsversorgungsvorrichtung zu unterbrechen. Nachteilig daran ist, dass eine Reaktionszeit dieser Sicherungen so lange ist, dass sowohl die Sicherung der Leistungsversorgungsvorrichtung als auch die Sicherung des Elektrofahrzeugs ausgelöst wird. Weiterhin ist es nicht möglich, den Leistungsstromkreis bei einer Fehlfunktion der Leistungsversorgungsvorrichtung bereits vor dem Auslösen der Sicherung von Elektrofahrzeugen zu unterbrechen und somit eine Funktionsfähigkeit des Elektrofahrzeugs zu erhalten. Problematisch ist außerdem, dass an einer solchen Leistungsversorgungsvorrichtung verschiedenste Kraftfahrzeuge, vom Kleinwagen bis zum Lastkraftwagen geladen werden können, wobei sich die dabei auftretenden Grenz-Ladeparameter, beispielsweise eine maximale Ladestromstärke, stark unterscheiden. So kann es beispielsweise bei einem Entladevorgang passieren, dass eine Sicherung eines Kleinwagens bei einer bestimmten Ladestromstärke bereits durchbrennt, wobei ein Nutzfahrzeug ohne Probleme mit dieser Ladestromstärke hätte entladen werden können. Ebenfalls ist der Leistungsversorgungsvorrichtung eine Auslösecharakteristik der Sicherung des Elektrofahrzeugs nicht bekannt, womit diese somit auch nicht geschützt werden kann.

Der Erfindung liegt daher die Aufgabe zugrunde, ein Verfahren zum Betreiben einer elektrischen Leistungsversorgungsvorrichtung zum Laden einer Energiespeichervorrichtung, eine Abschaltsteuervorrichtung, eine Abschalteinrichtung, und eine Leistungsversorgungsvorrichtung zu schaffen, wobei die genannten Nachteile zumindest reduziert sind, vorzugsweise vermieden werden.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Verfahren zum Betreiben einer elektrischen Leistungsversorgungsvorrichtung, insbesondere einer Ladestation, zum uni- oder bidirektionalen Laden einer Energiespeichervorrichtung, insbesondere eines Batteriespeichers eines Elektrofahrzeugs, geschaffen wird. In dem Verfahren werden während eines Ladevorgangs Daten einer Datenübertragung zwischen der Leistungsversorgungsvorrichtung und der Energiespeichervorrichtung empfangen. Die Daten enthalten zumindest einen für den Ladevorgang charakteristischen Grenz-Ladeparameter. Abhängig von dem zumindest einen Grenz-Ladeparameter wird eine Ist-Notabschaltschwelle der Leistungsversorgungsvorrichtung für einen Ladeparameter gesetzt. Wenn der Ladeparameter die Ist-Notabschaltschwelle überschreitet, wird eine Notfallmaßnahme durchgeführt, insbesondere um die Leistungsversorgungsvorrichtung und/oder die Energiespeichervorrichtung vor einer Beschädigung zu schützen.

Vorteilhafterweise kann mit dem Verfahren eine Kommunikation zwischen der Energiespeichervorrichtung und der Leistungsversorgungsvorrichtung erfasst und genutzt werden, um das Auslösemerkmal - die Ist-Notabschaltschwelle - der Notfallmaßnahme flexibel an die jeweilige Energiespeichervorrichtung, insbesondere an deren Grenz-Ladeparameter, beispielsweise eine maximale Ladestromstärke, anzupassen. Damit ist es möglich, den Leistungsstromkreis der elektrischen Leistungsversorgungsvorrichtung bei einer Fehlfunktion derselben zu unterbrechen, bevor eine Energiespeichervorrichtung die Fehlfunktion registriert und insbesondere eine Sicherung der Energiespeichervorrichtung ausgelöst wird. Mittels der variabel angepassten Ist-Notabschaltschwelle kann zeitlich früher eine Notfallmaßnahme durchgeführt werden als mittels einer für viele Energiespeichervorrichtungen verwendeten festen Abschaltschwelle der Leistungsversorgungsvorrichtung. Beispielsweise kann die Ist-Notabschaltschwelle an den Grenz-Ladeparameter, beispielsweise an die maximale Ladestromstärke, von verschiedensten Elektrofahrzeugen - vom Kleinwagen bis zum Lastkraftwagen - angepasst werden. Dabei kann verhindert werden, dass die Sicherung eines Kleinwagens durchbrennt. Der Leistungsversorgungsvorrichtung ist zwar nicht bekannt, dass ein Kleinwagen geladen wird, jedoch ist der Leistungsversorgungsvorrichtung ein Grenz-Ladeparameter, beispielsweise eine maximale Ladestromstärke, bekannt. Weiter ist es vorteilhafterweise nicht notwendig, eine Auslösecharakteristik und/oder einen Nennstrom einer Sicherung des Elektrofahrzeugs zu kennen, sodass mittels des Verfahrens auch Energiespeichervorrichtungen vor einer Beschädigung geschützt werden, die Sicherungen mit unterschiedlichen Auslösecharakteristiken und/oder Nennströmen aufweisen. Ebenfalls werden kritische Kurzschlüsse mit einer hohen Stromstärkeanstiegsgeschwindigkeit - also einem vergleichsweise hohen Stromstärkegradienten - verhindert, indem der Leistungsstromkreis bereits bei einer noch zulässigen Ladestromstärke bezogen auf die gerade angeschlossene Energiespeichervorrichtung unterbrochen und somit der Ladevorgang beendet wird. Weiter ist es möglich, einen vergleichsweise kleinen Abstand zwischen einer einen störungsfreien Ladevorgang charakterisierenden Ladestromstärke und der Ist-Notabschaltschwelle zu realisieren. Die Ist-Notabschaltschwelle wird bevorzugt zu Beginn eines Ladevorgangs gesetzt, kann aber auch optional während des Ladevorgangs, insbesondere ein oder mehrmals, insbesondere zyklisch, erneut gesetzt und somit dynamisch angepasst werden.

Unter dem Begriff "Laden" wird im Kontext der vorliegenden technischen Lehre neben einem Aufladen insbesondere auch ein Entladen verstanden. Bei einem Aufladevorgang wird insbesondere die Energiespeichervorrichtung von der Leistungsversorgungsvorrichtung aufgeladen. Bei einem Entladevorgang wird insbesondere die Energiespeichervorrichtung entladen, wobei die Energie an die Leistungsversorgungsvorrichtung übertragen wird. Die übertragene Energie kann an ein Stromnetz, mit dem die Leistungsversorgungsvorrichtung verbunden ist, weitergegeben werden, um dieses zu stabilisieren oder temporär zu stützen. Die Leistungsversorgungsvorrichtung dient hier somit als Zugangspunkt zum Stromnetz. Alternativ oder zusätzlich kann ein Vorrichtungsenergiespeicher der Leistungsversorgungsvorrichtung mit der übertragenen Energie aufgeladen werden. Ein unidirektionales Laden umfasst typischerweise nur Aufladevorgänge, während ein bidirektionales Laden sowohl Auflade- als auch Entladevorgänge umfasst. Unter einem Ladeparameter wird im Kontext der vorliegenden technischen Lehre somit insbesondere ein Aufladeparameter und ein Entladeparameter verstanden. Unter einen Grenz-Ladeparameter wird im Kontext der vorliegenden technischen Lehre somit insbesondere ein Grenz-Aufladeparameter und ein Grenz-Entladeparameter verstanden.

Im Kontext der vorliegenden technischen Lehre ist ein positiver Ladestrom eine Energieübertragung von der Leistungsversorgungsvorrichtung zu der Energiespeichervorrichtung - also ein Aufladen. Weiterhin ist im Kontext der vorliegenden technischen Lehre ein negativer Ladestrom eine Energieübertragung von der Energiespeichervorrichtung zu der Leistungsversorgungsvorrichtung - also ein Entladen.

Als Leistungsversorgungsvorrichtung, insbesondere Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne die Energiespeichervorrichtung - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Der Ladeparameter ist insbesondere ein momentaner Ladeparameter, beispielsweise eine momentane Ladeleistung, eine momentane Ladespannung oder eine momentane Ladestromstärke, mit der die Leistungsversorgungsvorrichtung und/oder die Energiespeichervorrichtung geladen wird. Der Ladeparameter wird in für sich genommen üblicher Weise durch eine Steuervorrichtung der Leistungsversorgungsvorrichtung erfasst oder ist der Steuervorrichtung bekannt. Der Ladeparameter ist dabei nicht zu verwechseln mit dem aus der Datenübertragung empfangenen Grenz-Ladeparameter, der bevorzugt ein maximaler Ladeparameter ist - also ein maximal zulässiger Ladeparameter, den insbesondere die Leistungsversorgungsvorrichtung und/oder die Energiespeichervorrichtung vorgibt - oder eine Ladeparameteranforderung - also ein momentan gewünschter Ladeparameter, den insbesondere die Leistungsversorgungsvorrichtung und/oder die Energiespeichervorrichtung vorgibt.

In einer Ausführungsform wird in dem Verfahren ein bidirektionaler Ladestrom überwacht. Damit ist vorteilhafterweise auch eine Überwachung eines Ladestroms von der Energiespeichervorrichtung zu der elektrischen Leistungsversorgungsvorrichtung möglich. Insbesondere kann damit der Vorrichtungsenergiespeicher der Leistungsversorgungsvorrichtung geladen werden oder ein Stromnetz stabilisiert oder temporär gestützt werden. Vorteilhafterweise kann auch im Falle einer Fehlfunktion der Leistungsversorgungsvorrichtung beim bidirektionalen Laden vermieden werden, dass eine Sicherung der Energiespeichervorrichtung auslöst und beispielsweise ein Elektrofahrzeug nicht mehr funktionstüchtig ist. Vielmehr wird vermieden, dass die Sicherung des Elektrofahrzeugs überhaupt einem Betrieb mit von einem normalen Betrieb abweichenden Ladeparameter ausgesetzt wird. Besonders vorteilhaft erweist sich dies bei Batterien, die eine integrierte Sicherung aufweisen. Diese müssen, aufgrund der nicht ausgelösten Sicherung, nicht mehr kostenintensiv ausgetauscht werden. Vorteilhafterweise kann insgesamt ein Abschleppen und Instandsetzen des Elektrofahrzeugs vermieden werden.

In einer Ausführungsform ist der Ladeparameter vorzeichenfrei gegeben, insbesondere als Betrag, Betragsquadrat oder Quadratwurzel des Betragsquadrats. Entsprechend ist bevorzugt die Ist-Notabschaltschwelle eine vorzeichenfreie Größe, insbesondere ein Betrag. Dass der Ladeparameter die zugeordnete Ist-Notabschaltschwelle überschreitet, bedeutet somit insbesondere, dass er betragsmäßig größer wird als die Ist-Notabschaltschwelle, unabhängig vom Vorzeichen des Ladeparameters.

In einer Ausführungsform ist vorgesehen, dass während des Ladevorgangs ein zeitlicher Ladeparametergradient des für den Ladevorgang charakteristischen Ladeparameters erfasst wird. Wenn anhand des erfassten Ladeparametergradienten auf eine Störung des Ladevorgangs geschlossen wird, wird die Notfallmaßnahme durchgeführt, um die Leistungsversorgungsvorrichtung und/oder die Energiespeichervorrichtung vor einer Beschädigung zu schützen.

In einer Ausführungsform ist vorgesehen, dass der Ladeparametergradient direkt erfasst wird, wobei der Ladeparametergradient mit einem vorbestimmten Gradienten-Schwellenwert als Ist-Notabschaltschwelle verglichen wird. Auf eine Störung des Ladevorgangs wird geschlossen, wenn der erfasste Ladeparametergradient den vorbestimmten Gradienten-Schwellenwert überschreitet. Alternativ ist vorgesehen, dass der Ladeparametergradient indirekt erfasst wird, indem ein für den Ladeparametergradient charakteristischer Messparameter gemessen wird, wobei der Messparameter mit einem vorbestimmten Messparameter-Schwellenwert als Ist-Notabschaltschwelle verglichen wird, wobei auf eine Störung des Ladevorgangs geschlossen wird, wenn der Messparameter den vorbestimmten Messparameter-Schwellenwert überschreitet.

Gemäß einer Weiterbildung der Erfindung ist vorgesehen, dass die Ist-Notabschaltschwelle gesetzt wird, indem abhängig von dem zumindest einen Grenz-Ladeparameter eine Soll-Notabschaltschwelle der Leistungsversorgungsvorrichtung für den Ladeparameter bestimmt wird. Es wird geprüft, ob ein aktueller Ist-Wert der Ist-Notabschaltschwelle der Leistungsversorgungsvorrichtung gleich einem Soll-Wert der Soll-Notabschaltschwelle ist, insbesondere den gleichen Wert aufweist. Wenn der aktuelle Ist-Wert nicht gleich dem Soll-Wert ist, insbesondere nicht den gleichen Wert aufweist, wird die Ist-Notabschaltschwelle angepasst, sodass ein neuer Ist-Wert der Ist-Notabschaltschwelle gleich dem Soll-Wert ist, insbesondere den gleichen Wert aufweist.

In einer Ausführungsform ist vorgesehen, dass das Verfahren oder zumindest ein Schritt des Verfahrens wiederholt wird, insbesondere zyklisch, insbesondere mit einer Frequenz von 10 kHz bis 50 kHz. Insbesondere wird das Verfahren oder zumindest ein Schritt des Verfahrens während dem Ladevorgang wiederholt, insbesondere zyklisch, insbesondere mit einer Frequenz von 10 kHz bis 50 kHz.

Gemäß einer Weiterbildung der Erfindung ist vorgesehen, dass als Notfallmaßnahme ein Leistungsstromkreis einer Leistungselektronik, insbesondere der Leistungsversorgungsvorrichtung und/oder der Energiespeichervorrichtung, unterbrochen wird, insbesondere derart, dass der Ladevorgang unterbrochen wird. Vorteilhafterweise wird damit eine Beschädigung der Leistungsversorgungsvorrichtung und/oder der Energiespeichervorrichtung effektiv vermieden.

Gemäß einer Weiterbildung der Erfindung ist vorgesehen, dass der Grenz-Ladeparameter ausgewählt ist aus einer Gruppe, bestehend aus: Einer maximalen Ladeleistung der Leistungsversorgungsvorrichtung, einer maximalen Ladeleistung der Energiespeichervorrichtung, einer maximalen Ladespannung der Leistungsversorgungsvorrichtung, einer maximalen Ladespannung der Energiespeichervorrichtung, einer maximalen Ladestromstärke der Leistungsversorgungsvorrichtung, einer maximalen Ladestromstärke der Energiespeichervorrichtung, einer momentanen Leistungsanforderung der Energiespeichervorrichtung, einer momentanen Leistungsanforderung der Leistungsversorgungsvorrichtung, einer momentanen Spannungsanforderung der Energiespeichervorrichtung, einer momentanen Spannungsanforderung der Leistungsversorgungsvorrichtung, einer momentanen Stromstärkeanforderung der Energiespeichervorrichtung, einer momentanen Stromstärkeanforderung der Leistungsversorgungsvorrichtung, einem momentanen Ladeleistungsgradienten, einem momentanen Ladespannungsgradienten und einem momentanen Ladestromstärkegradienten.

Vorteilhafterweise kann die Ist-Notabschaltschwelle flexibel an verschiedene Energiespeichervorrichtungen angepasst werden. So kann die Ist-Notabschaltschwelle beispielsweise bei einem elektrischen Kleinfahrzeug mit einer maximalen Ladestromstärke von 125 A - bei einer Ladespannung von 400 V ergibt dies eine Ladeleistung von 50 kW - niedriger gesetzt werden, als bei einem elektrischen Nutzfahrzeug mit einer maximalen Ladestromstärke von 625 A - bei einer Ladespannung von 400 V ergibt dies eine Ladeleistung von 250 kW - bei dem die Ist-Notabschaltschwelle höher gesetzt wird. Somit können verschiedene Elektrofahrzeuge vor einer Beschädigung geschützt werden.

In einer Ausführungsform, insbesondere wenn die Energiespeichervorrichtung Teil eines Elektrofahrzeugs ist, wird als der Grenz-Ladeparameter ein Parameter ausgewählt, der in der Norm IEC61851-24 in ihrer an dem den Zeitrang des vorliegenden Schutzrechts bestimmenden Tag gültigen Fassung definiert ist. Insbesondere wird der Grenz-Ladeparameter ausgewählt aus einer Gruppe, bestehend aus: Einer maximalen Ladestromstärke des Elektrofahrzeugs (eng: Maximum current limit of electric vehicle), einer maximalen Ladespannung des Elektrofahrzeugs (eng: Maximum voltage limit of electric vehicle), einer Stromanforderung für das System der gesteuerten Stromaufladung (eng: Current request for the controlled current charging (CCC) system), einer Spannungsanforderung für das System der gesteuerten Spannungsaufladung (eng: Voltage request for the controlled voltage charging (CVC) system), einer maximalen Nennspannung einer Gleichstrom-Leistungsversorgungsvorrichtung für Elektrofahrzeuge (eng: Maximum rated voltage of direct current electric vehicle supply equipment), einem maximalen Nennstrom einer Gleichstrom-Leistungsversorgungsvorrichtung für Elektrofahrzeuge (eng: Maximum rated current of direct current electric vehicle supply equipment) und einem momentan verfügbaren Ladestrom der Leistungsversorgungsvorrichtung (eng: Electric vehicle supply equipment real-time available load current).

Gemäß einer Weiterbildung der Erfindung ist vorgesehen, dass die Ist-Notabschaltschwelle zusätzlich abhängig von einem ersten Toleranzwert gesetzt wird. Der erste Toleranzwert ist charakteristisch für eine Toleranz des Ladevorgangs, insbesondere des Ladeparameters. Vorteilhafterweise wird damit verhindert, dass die Notfallmaßnahme aufgrund einer betriebsmäßig üblichen Schwankung des Ladeparameters - die nicht zu einer Beschädigung führen kann - durchgeführt wird.

Insbesondere erhöht der erste Toleranzwert die Ist-Notabschaltschwelle.

In einer Ausführungsform wird die Ist-Notabschaltschwelle gesetzt, indem zunächst der Grenz-Ladeparameter vermittelt über die Daten der Datenübertragung empfangen wird. Anschließend kann der Grenz-Ladeparameter um den ersten Toleranzwert erhöht werden, wobei die Soll-Notabschaltschwelle erhalten wird. Anschließend kann diese mit der Ist-Notabschaltschwelle verglichen werden und, falls diese unterschiedlich sind, kann der Ist-Wert der Ist-Notabschaltschwelle auf den Soll-Wert der Soll-Notabschaltschwelle gesetzt werden.

In einer Ausführungsform, insbesondere wenn die Energiespeichervorrichtung Teil eines Elektrofahrzeugs ist, wird als erster Toleranzwert ein Wert gewählt, der in der Norm IEC61851-23 in ihrer an dem den Zeitrang des vorliegenden Schutzrechts bestimmenden Tag gültigen Fassung definiert ist. Insbesondere beträgt der erste Toleranzwert, wenn als Grenz-Ladeparameter eine Stromstärke verwendet wird,
- 150 mA, wenn die momentane Stromstärkeanforderung kleiner 5 A ist,
- 1,5 A, wenn die momentane Stromstärkeanforderung gleich oder größer als 5 A und kleiner oder gleich 50 A ist, und
- 3 % einer momentanen Ladestromstärke, wenn die momentane Stromstärkeanforderung größer als 50 A ist.

In einer Ausführungsform wird die Ist-Notabschaltschwelle - insbesondere zusätzlich - abhängig von einem zweiten Toleranzwert gesetzt, wobei der zweite Toleranzwert charakteristisch ist für eine Auslösetoleranz der Notfallmaßnahme. Die Auslösetoleranz der Notfallmaßnahme ist insbesondere abhängig von einer momentanen Temperatur einer die Notfallmaßnahme durchführenden Abschaltanordnung und/oder eines Alterungsgrads von elektronischen Bauteilen der Abschaltanordnung.

Insbesondere beträgt der zweite Toleranzwert bis zu 20 % des Ladeparameters oder des Grenz-Ladeparameters.

Insbesondere erhöht der zweite Toleranzwert die Ist-Notabschaltschwelle.

In einer Ausführungsform ist der erste Toleranzwert und/oder der zweite Toleranzwert vorzeichenfrei gegeben, insbesondere als Betrag, Betragsquadrat oder Quadratwurzel des Betragsquadrats. Dass der erste Toleranzwert und/oder der zweite Toleranzwert die Ist-Notabschaltschwelle erhöht, bedeutet somit insbesondere, dass er die Ist-Notabschaltschwelle betragsmäßig erhöht.

In einer Ausführungsform wird die Ist-Notabschaltschwelle gesetzt, indem zunächst der Grenz-Ladeparameter vermittelt über die Daten der Datenübertragung empfangen wird. Anschließend kann der Grenz-Ladeparameter um den zweiten Toleranzwert erhöht werden, wobei die Soll-Notabschaltschwelle erhalten wird. Anschließend kann diese mit der Ist-Notabschaltschwelle verglichen werden und, falls diese unterschiedlich sind, kann der Ist-Wert der Ist-Notabschaltschwelle auf den Soll-Wert der Soll-Notabschaltschwelle gesetzt werden. In einer anderen Ausführungsform wird die Ist-Notabschaltschwelle gesetzt, indem zunächst der Grenz-Ladeparameter vermittelt über die Daten der Datenübertragung empfangen wird. Anschließend kann der Grenz-Ladeparameter um den ersten Toleranzwert und um den zweiten Toleranzwert erhöht werden, wobei die Soll-Notabschaltschwelle erhalten wird. Anschließend kann diese mit der Ist-Notabschaltschwelle verglichen werden und, falls diese unterschiedlich sind, kann der Ist-Wert der Ist-Notabschaltschwelle auf den Soll-Wert der Soll-Notabschaltschwelle gesetzt werden.

In einer Ausführungsform wird die Ist-Notabschaltschwelle derart gesetzt, dass diese oberhalb eines ersten Grenz-Ladeparameters der Grenz-Ladeparameter und unterhalb eines artgleichen - das heißt eine gleiche physikalische Dimension und/oder eine gleiche physikalische Bedeutung aufweisenden, beispielsweise sind beide Stromstärken oder beide Spannungen - zweiten Grenz-Ladeparameters der Grenz-Ladeparameter liegt. Insbesondere liegt die Ist-Notabschaltschwelle oberhalb einer momentanen Anforderung der Energiespeichervorrichtung, ausgewählt aus der momentanen Leistungsanforderung, der momentanen Spannungsanforderung und der momentanen Stromstärkeanforderung, und unterhalb eines artgleichen Grenz-Ladeparameters der Energiespeichervorrichtung, ausgewählt aus der maximalen Ladeleistung der Energiespeichervorrichtung, der maximalen Ladespannung der Energiespeichervorrichtung und der maximalen Ladestromstärke der Energiespeichervorrichtung.

Alternativ oder zusätzlich wird die Ist-Notabschaltschwelle abhängig von einem Leistungsversorgungsvorrichtungs-Grenz-Ladeparameter der Grenz-Ladeparameter und einem Energiespeichervorrichtungs-Grenz-Ladeparameter der Grenz-Ladeparameter gesetzt, wobei insbesondere der Leistungsversorgungsvorrichtungs-Grenz-Ladeparameter und der Energiespeichervorrichtungs-Grenz-Ladeparameter miteinander verglichen werden und die Ist-Notabschaltschwelle abhängig von dem wertkleineren, insbesondere betragskleineren Grenz-Ladeparameter gesetzt wird.

Gemäß einer Weiterbildung der Erfindung ist vorgesehen, dass die Daten der Datenübertragung zwischen der Leistungsversorgungsvorrichtung und der Energiespeichervorrichtung mittels einer Erfassungsvorrichtung erfasst werden.

Gemäß einer Weiterbildung der Erfindung ist vorgesehen, dass die Daten an einer Leitung, einem Ladekabel, das die Leistungsversorgungsvorrichtung mit der Energiespeichervorrichtung verbindet, einer Leistungselektronik, einer elektrischen Schnittstelle und/oder an einer Steuervorrichtung der Leistungsversorgungsvorrichtung erfasst werden.

In einer Ausführungsform werden die Daten einer Datenübertragung, die eine elektrische Leitung im Kleinspannungsnetz (eng: Powerline Communication (PLC)) und/oder ein serielles Bussystem (eng: Controller Area Network (CAN)) nutzt, erfasst und/oder empfangen. Insbesondere ist die Erfassungsvorrichtung eingerichtet, um Daten einer Datenübertragung, die eine elektrische Leitung im Kleinspannungsnetz (eng: Powerline Communication (PLC)) nutzt, und/oder Daten einer Datenübertragung, die ein serielles Bussystem (eng: Controller Area Network (CAN)) nutzt, zu empfangen. Insbesondere verläuft die elektrische Leitung von der Leistungsversorgungsvorrichtung zu der Energiespeichervorrichtung, insbesondere innerhalb eines Ladekabels. Dabei ist die elektrische Leitung insbesondere eine von dem Leistungsstromkreis verschiedene Leitung innerhalb des Ladekabels.

Vorteilhafterweise können die Daten direkt oder indirekt erfasst werden: Die Daten können direkt erfasst werden, indem die Erfassungsvorrichtung eingerichtet ist, um mittels einer Kommunikationsschnittstelle, vorzugsweise einem seriellen Bussystem oder einer Netzwerkschnittstelle, mit der Leistungsversorgungsvorrichtung zu kommunizieren. Vorzugsweise kommuniziert die Erfassungsvorrichtung mit der Steuervorrichtung und/oder der Leistungselektronik direkt. Die Daten können indirekt erfasst werden, indem die Erfassungsvorrichtung eingerichtet ist, um die Datenübertragung auf einem Datenübertragungsweg zu erfassen, insbesondere ohne hierzu direkt mit der Steuervorrichtung zu kommunizieren. Dabei kann der Datenübertragungsweg geöffnet, insbesondere aufgetrennt werden, wobei die Erfassungsvorrichtung dazwischengesetzt und der Datenübertragungsweg wieder geschlossen wird. Alternativ ist es möglich, dass die Erfassungsvorrichtung die Datenübertragung ohne eine galvanische Verbindung zum Datenübertragungsweg selbst erfasst - also quasi die Datenübertragung insbesondere elektrisch kontaktlos, insbesondere galvanisch entkoppelt, insbesondere induktiv, abhört. Dies erfolgt vorzugsweise an der Leitung oder dem Ladekabel.

In einer Ausführungsform wird zusätzlich der Ladeparameter direkt oder indirekt - beispielsweise über eine Spannung, die aufgrund eines Stromstärkegradienten über einer Induktivität abfällt - erfasst.

Die Aufgabe wird auch gelöst, indem eine Abschaltsteuervorrichtung für eine Leistungsversorgungsvorrichtung zum uni- oder bidirektionalen Laden einer Energiespeichervorrichtung geschaffen wird. Die Abschaltsteuervorrichtung ist eingerichtet, um ein erfindungsgemäßes Verfahren oder ein Verfahren gemäß einer oder mehreren der zuvor beschriebenen Ausführungsformen durchzuführen. In Zusammenhang mit der Abschaltsteuervorrichtung ergeben sich insbesondere die Vorteile, die bereits in Zusammenhang mit dem Verfahren erläutert wurden.

Gemäß einer Weiterbildung der Erfindung ist vorgesehen, dass die Abschaltsteuervorrichtung eingerichtet ist, um mit einer Erfassungsvorrichtung wirkverbunden zu werden. Ferner ist die Abschaltsteuervorrichtung eingerichtet, um von der Erfassungsvorrichtung - direkt und/oder indirekt - erfasste Daten einer Datenübertragung zwischen der Leistungsversorgungsvorrichtung und der Energiespeichervorrichtung zu empfangen.

Gemäß einer Weiterbildung der Erfindung ist vorgesehen, dass die Abschaltsteuervorrichtung eingerichtet ist, um mit einem Leistungsstromkreis der Leistungsversorgungsvorrichtung wirkverbunden zu werden und um den Leistungsstromkreis zu unterbrechen.

In einer Ausführungsform ist die Abschaltsteuervorrichtung mit der Abschaltanordnung steuerungswirkverbunden. Insbesondere ist die Abschaltanordnung eingerichtet, um ein Unterbrechungssignal der Abschaltsteuervorrichtung zu empfangen und daraufhin den Leistungsstromkreis zu unterbrechen.

In einer Ausführungsform weist die Abschaltanordnung ein erstes ansteuerbares Leistungshalbleiter-Bauteil und ein zweites ansteuerbares Leistungshalbleiter-Bauteil. Das erste Leistungshalbleiter-Bauteil und das zweite Leistungshalbleiter-Bauteil sind antiseriell angeordnet. Das erste Leistungshalbleiter-Bauteil und das zweite Leistungshalbleiter-Bauteil sind eingerichtet, um in einem eingeschalteten Zustand den Ladestrom der Leistungsversorgungsvorrichtung zu leiten. Die Abschaltsteuervorrichtung ist mit dem ersten Leistungshalbleiter-Bauteil und dem zweiten Leistungshalbleiter-Bauteil wirkverbunden und eingerichtet zu deren jeweiliger Ansteuerung. Weiter ist die Abschaltsteuervorrichtung eingerichtet, um den Wert des mindestens einen für den Ladestrom charakteristischen Ladeparameters zu erfassen, und in Abhängigkeit von dem erfassten Wert das erste Leistungshalbleiter-Bauteil und/oder das zweite Leistungshalbleiter-Bauteil abzuschalten und dadurch den Ladestrom, insbesondere den Leistungsstromkreis zu unterbrechen.

Optional weist die Abschaltanordnung eine Diode auf, wobei die Diode, das erste Leistungshalbleiter-Bauteil und das zweite Leistungshalbleiter-Bauteil als T-Schaltung angeordnet sind.

Im Kontext der vorliegenden technischen Lehre sind bei einer T-Schaltung insbesondere drei elektrische Bauteile an einem einzigen Verbindungspunkt elektrisch miteinander verbunden. Dabei sind ein erster Anschluss des ersten Bauteils, insbesondere das erste Leistungshalbleiter-Bauteil, und ein erster Anschluss des zweiten Bauteils, insbesondere das zweite Leistungshalbleiter-Bauteil, über den Verbindungspunkt elektrisch miteinander verbunden. Zusätzlich sind der erste Anschluss des ersten Bauteils und ein erster Anschluss des dritten Bauteils, insbesondere die Diode, über den Verbindungspunkt elektrisch miteinander verbunden. Zusätzlich sind der erste Anschluss des zweiten Bauteils und der erste Anschluss des dritten Bauteils über den Verbindungspunkt elektrisch miteinander verbunden. Weiterhin ist ein zweiter Anschluss des ersten Bauteils und ein zweiter Anschluss des dritten Bauteils mit einer Spannungs- oder Stromquelle, insbesondere der Leistungsversorgungsvorrichtung oder der Energiespeichervorrichtung, verbunden oder verbindbar. Darüber hinaus sind ein zweiter Anschluss des zweiten Bauteils und der zweite Anschluss des dritten Bauteils mit einem Verbraucher, insbesondere der Energiespeichervorrichtung, verbunden oder verbindbar, wobei die Spannungs- oder Stromquelle und der Verbraucher verschieden ausgebildet sind.

Insbesondere übernimmt die Diode nach der Unterbrechung den Ladestrom, der dann langsam über die Diode abgebaut wird. Vorteilhafterweise ist es mittels der Diode möglich, Energie aus einer Leitungsinduktivität des Ladestrom abzuführen. Dabei weist der Ladestrom bei der Leitung über die Diode eine hohe Stromstärke und eine geringe Spannung von weniger als 2 V auf. Weiterhin verringert sich ebenfalls eine Abschaltdauer.

In einer Ausgestaltung ist die Abschaltanordnung derart eingerichtet, dass ein positiver Ladestrom von dem zweiten Leistungshalbleiter-Bauteil immer geleitet wird. Zusätzlich ist die Abschaltanordnung derart eingerichtet, dass ein positiver Ladestrom von dem ersten Leistungshalbleiter-Bauteil in Abhängigkeit von dem erfassten Wert des mindestens einen charakteristischen Ladeparameters unterbrochen wird. Weiterhin ist die Abschaltanordnung derart eingerichtet, dass ein negativer Ladestrom von dem ersten Leistungshalbleiter-Bauteil immer geleitet wird. Zusätzlich ist die Abschaltanordnung derart eingerichtet, dass ein negativer Ladestrom von dem zweiten Leistungshalbleiter-Bauteil in Abhängigkeit von dem erfassten Wert des mindestens einen charakteristischen Ladeparameters unterbrochen wird. Dies wird vorliegend auch als antiparallele Anordnung, insbesondere als "antiparallel" bezeichnet.

Im Kontext der vorliegenden technischen Lehre weist ein Leistungshalbleiter-Bauteil mindestens einen Pluspol und mindestens einen Minuspol auf. Vorzugsweise weist ein Leistungshalbleiter-Bauteil zusätzlich einen Steueranschluss auf, wobei die Abschaltsteuervorrichtung mit dem Steueranschluss elektrisch verbunden ist.

Besonders bevorzugt ist das erste Leistungshalbleiter-Bauteil und/oder das zweite Leistungshalbleiter-Bauteil unidirektional sperrend ausgebildet.

In einer Ausführungsform ist vorgesehen, dass die Abschaltsteuervorrichtung eingerichtet ist, um den erfassten Wert mit der Ist-Notabschaltschwelle zu vergleichen, und in Abhängigkeit von dem Vergleich das erste Leistungshalbleiter-Bauteil und/oder das zweite Leistungshalbleiter-Bauteil abzuschalten und dadurch den Ladestrom zu unterbrechen. Vorteilhafterweise ist es damit möglich, in einfacher und schneller Weise über eine Abschaltung des ersten Leistungshalbleiter-Bauteils und/oder des zweiten Leistungshalbleiter-Bauteils zu entscheiden.

In einer Ausgestaltung ist die Abschaltsteuervorrichtung eingerichtet ist, um eine Differenz aus dem erfassten Wert und der Ist-Notabschaltschwelle zu bestimmen, und in Abhängigkeit von der Differenz das erste Leistungshalbleiter-Bauteil und/oder das zweite Leistungshalbleiter-Bauteil abzuschalten und dadurch den Ladestrom zu unterbrechen.

In einer Ausführungsform ist vorgesehen, dass das erste Leistungshalbleiter-Bauteil einen ersten Halbleiter-Schalter und eine erste Bauteil-Diode aufweist, wobei der erste Halbleiter-Schalter und die erste Bauteil-Diode antiparallel angeordnet sind. Zusätzlich weist das zweite Leistungshalbleiter-Bauteil einen zweiten Halbleiter-Schalter und eine zweite Bauteil-Diode auf, wobei der zweite Halbleiter-Schalter und die zweite Bauteil-Diode antiparallel angeordnet sind. Damit wird erreicht, dass ein elektrischer Strom, welcher von dem Pluspol des Leistungshalbleiter-Bauteils zu dem Minuspol des Leistungshalbleiter-Bauteils fließt, durch den Halbleiter-Schalter geleitet wird, da die Bauteil-Diode in Sperrrichtung angeordnet ist. Weiterhin wird erreicht, dass ein elektrischer Strom, welcher von dem Minuspol des Leistungshalbleiter-Bauteils zu dem Pluspol des Leistungshalbleiter-Bauteils fließt, durch die Bauteil-Diode geleitet wird, da die Bauteil-Diode in Durchlassrichtung angeordnet ist. Darüber hinaus sind, aufgrund der antiseriellen Anordnung des ersten Leistungshalbleiter-Bauteils und des zweiten Leistungshalbleiter-Bauteils, der erste Halbleiter-Schalter und der zweite Halbleiter-Schalter ebenfalls antiseriell in der Abschalteinrichtung angeordnet. Vorteilhafterweise bilden damit der erste Halbleiter-Schalter und der zweite Halbleiter-Schalter einen bidirektionalen Halbleiter-Schalter. Weiterhin ist es mittels der Halbleiter-Schalter möglich, den Ladestrom mittels eines entsprechenden Gate-Signals schnell zu unterbrechen. Zusätzlich sind, aufgrund der antiseriellen Anordnung des ersten Leistungshalbleiter-Bauteils und des zweiten Leistungshalbleiter-Bauteils, die erste Bauteil-Diode und die zweite Bauteil-Diode ebenfalls antiseriell in der Abschaltanordnung angeordnet.

In einer Ausgestaltung ist der erste Halbleiter-Schalter und/oder der zweite Halbleiter-Schalter als Feldeffekttransistor ausgebildet, insbesondere als Metall-Oxid-Halbleiter-Feldeffekttransistor (MOSFET). Insbesondere weist der Metall-Oxid-Halbleiter-Feldeffekttransistor einen Siliziumkarbid-Werkstoff auf. Wird ein n-Kanal-Feldeffekttransistor verwendet, ist ein Drain-Anschluss des Feldeffekttransistors dem Pluspol des Leistungshalbleiter-Bauteils zugeordnet und ein Source-Anschluss des Feldeffekttransistors ist dem Minuspol des Leistungshalbleiter-Bauteils zugeordnet. Wird alternativ ein p-Kanal-Feldeffekttransistor verwendet, ist der Source-Anschluss des Feldeffekttransistors dem Pluspol des Leistungshalbleiter-Bauteils zugeordnet und der Drain-Anschluss des Feldeffekttransistors ist dem Minuspol des Leistungshalbleiter-Bauteils zugeordnet. Besonders bevorzugt ist die Abschaltsteuervorrichtung eingerichtet, um die Halbleiter-Flussspannung, insbesondere eine Gate-Source-Spannung des Feldeffekttransistors, zu erfassen und daraus eine Stromstärke und/oder eine Spannung als den mindestens einen Ladeparameter zu ermitteln.

In einer weiteren Ausgestaltung ist der erste Halbleiter-Schalter und/oder der zweite Halbleiter-Schalter als Bipolartransistor mit isolierter Gate-Elektrode ausgebildet. Wird ein n-Kanal-Bipolartransistor verwendet, ist ein Kollektor-Anschluss des Bipolartransistors dem Pluspol des Leistungshalbleiter-Bauteils zugeordnet und ein Emitter-Anschluss des Bipolartransistors ist dem Minuspol des Leistungshalbleiter-Bauteils zugeordnet. Wird alternativ ein p-Kanal-Bipolartransistor verwendet, ist der Emitter-Anschluss des Bipolartransistors dem Pluspol des Leistungshalbleiter-Bauteils zugeordnet und der Kollektor-Anschluss des Bipolartransistors ist dem Minuspol des Leistungshalbleiter-Bauteils zugeordnet. Besonders bevorzugt ist die Abschaltsteuervorrichtung eingerichtet, um die Halbleiter-Flussspannung, insbesondere eine Basis-Emitter-Spannung des Bipolartransistors, zu erfassen und daraus eine Stromstärke und/oder eine Spannung als den mindestens einen Ladeparameter zu ermitteln.

In einer Ausführungsform ist der erste Halbleiter-Schalter und/oder der zweite Halbleiter-Schalter ein Bipolartransistor mit isolierter Gate-Elektrode (englisch: Insulated-Gate Bipolar Transistor; IGBT). Insbesondere weist dieser einen Silizium-Werkstoff auf. Insbesondere ist es damit möglich, den Ladestrom derart schnell zu unterbrechen, dass ein bei der Fehlfunktion auftretender Kurzschlussstrom einen Wert von I = 1 kA nicht überschreitet.

In einer Ausgestaltung ist eine Kathode der Bauteil-Diode des Leistungshalbleiter-Bauteils dem Pluspol des Leistungshalbleiter-Bauteils zugeordnet und eine Anode der Bauteil-Diode des Leistungshalbleiter-Bauteils ist dem Minuspol des Leistungshalbleiter-Bauteils zugeordnet.

In einer besonders bevorzugten Ausgestaltung sind das erste des Leistungshalbleiter-Bauteil und das zweite des Leistungshalbleiter-Bauteil identisch ausgebildet.

In einer Ausgestaltung ist vorgesehen, dass die Abschaltsteuervorrichtung eingerichtet ist, um das erste Leistungshalbleiter-Bauteil und/oder das zweite Leistungshalbleiter-Bauteil mittels der Steuerspannung abzuschalten.

Insbesondere beträgt die Steuerspannung zum Abschalten des ersten Leistungshalbleiter-Bauteils und/oder des zweiten Leistungshalbleiter-Bauteils vorzugsweise höchstens 0 V. Insbesondere ist das erste Leistungshalbleiter-Bauteil abgeschaltet und somit der Ladestrom unterbrochen, wenn an dem ersten Leistungshalbleiter-Bauteil, insbesondere an einem Gate-Anschluss des ersten Leistungshalbleiter-Bauteils, eine Steuerspannung mit höchstens 0 V anliegt. Weiterhin ist das zweite Leistungshalbleiter-Bauteil abgeschaltet und somit der Ladestrom unterbrochen, wenn an dem zweiten Leistungshalbleiter-Bauteil, insbesondere an einem Gate-Anschluss des zweiten Leistungshalbleiter-Bauteils, eine Steuerspannung mit höchstens 0 V anliegt. Insbesondere sind das erste Leistungshalbleiter-Bauteil und das zweite Leistungshalbleiter-Bauteil eingeschaltet und somit der Ladestrom nicht unterbrochen, wenn an dem ersten Leistungshalbleiter-Bauteil und an dem zweiten Leistungshalbleiter-Bauteil, insbesondere an den jeweiligen Gate-Anschlüssen, jeweils eine Steuerspannung von 15 V bis 20 V anliegt.

Unter einem Unterbrechungssignal wird im Kontext der vorliegenden technischen Lehre insbesondere ein elektrisches Signal verstanden. Das elektrische Signal kann eine Steuerspannung an einem Gate-Anschluss eines Leistungshalbleiter-Bauteils sein.

Gemäß einer Weiterbildung der Erfindung ist vorgesehen, dass die Abschaltsteuervorrichtung durch eine Steuervorrichtung der Leistungsversorgungsvorrichtung gebildet oder als die Steuervorrichtung der Leistungsversorgungsvorrichtung ausgebildet ist. Alternativ ist es in einer anderen Ausgestaltung - insbesondere der im Folgenden beschriebenen Nachrüstlösung - möglich, dass die Abschaltsteuervorrichtung separat von der Steuervorrichtung der Leistungsversorgungsvorrichtung vorgesehen, vorzugsweise aber mit dieser wirkverbunden ist. Insbesondere ist die Steuervorrichtung mit der Abschaltanordnung steuerungswirkverbunden, um das Unterbrechungssignal an die Abschaltanordnung zu übermitteln.

Die Aufgabe wird auch gelöst, indem eine Abschalteinrichtung, insbesondere zum Nachrüsten an einer Leistungsversorgungsvorrichtung zum uni- oder bidirektionalen Laden einer Energiespeichervorrichtung, geschaffen wird. Die Abschalteinrichtung weist die Abschaltanordnung auf, die eingerichtet ist, um einen Leistungsstromkreis zu unterbrechen. Ferner weist die Abschalteinrichtung eine erfindungsgemäße Abschaltsteuervorrichtung oder eine Abschaltsteuervorrichtung gemäß einer oder mehreren der zuvor beschriebenen Ausführungsformen auf, die mit der Abschaltanordnung zu deren Ansteuerung wirkverbunden ist. In Zusammenhang mit der Abschalteinrichtung ergeben sich insbesondere die Vorteile, die bereits in Zusammenhang mit dem Verfahren und der Abschaltsteuervorrichtung erläutert wurden.

Die Abschalteinrichtung kann vorteilhafterweise bei einer vorhandenen Leistungsversorgungsvorrichtung nachgerüstet werden. Dabei können die Abschaltanordnung und die Abschaltsteuervorrichtung als kompaktes Modul in einem einzigen Gehäuse angeordnet sein. Das Gehäuse kann einfach in die Leistungsversorgungsvorrichtung, beispielsweise in einen freien Schacht, eingesetzt und mit dieser verschraubt werden. Die Abschaltanordnung wird dann mit dem Leistungsstromkreis wirkverbunden.

In einer Ausführungsform ist vorgesehen, dass die Abschalteinrichtung die Erfassungsvorrichtung zur Erfassung von mindestens einem für einen Ladevorgang charakteristischen Grenz-Ladeparameter aufweist. Die Erfassungsvorrichtung ist mit der Abschaltsteuervorrichtung wirkverbunden und eingerichtet, um den mindestens einen Grenz-Ladeparameter an die Abschaltsteuervorrichtung zu übermitteln. Die Erfassungsvorrichtung kann vorteilhafterweise ebenfalls in dem Gehäuse der Abschalteinrichtung angeordnet sein. Insbesondere ist die Erfassungsvorrichtung dann derart mit der Steuervorrichtung der Leistungsversorgungsvorrichtung verbunden, um Daten der Datenübertragung direkt zu erfassen. Alternativ ist die Erfassungsvorrichtung außerhalb des Gehäuses angeordnet und mit dem Datenübertragungsweg verbunden, um Daten der Datenübertragung indirekt zu erfassen. Insbesondere kann die Erfassungsvorrichtung einfach um ein Ladekabel gelegt oder geklemmt oder anderweitig an dem Ladekabel befestigt werden.

Insbesondere ist die Abschaltanordnung eingerichtet, um das Unterbrechungssignal der Abschaltsteuervorrichtung zu empfangen und daraufhin den Leistungsstromkreis zu unterbrechen.

Die Aufgabe wird auch gelöst, indem eine Leistungsversorgungsvorrichtung zum uni- oder bidirektionalen Laden einer Energiespeichervorrichtung geschaffen wird. Die Leistungsversorgungsvorrichtung weist eine Leistungselektronik auf, die eingerichtet ist, um einen Leistungsstromkreis zum uni- oder bidirektionalen Laden der Energiespeichervorrichtung wahlweise zu schließen oder zu öffnen. Die Leistungsversorgungvorrichtung weist zusätzlich eine erfindungsgemäße Abschalteinrichtung oder eine Abschalteinrichtung gemäß einer oder mehreren der zuvor beschriebenen Ausführungsformen oder eine erfindungsgemäße Abschaltsteuervorrichtung oder eine Abschaltsteuervorrichtung gemäß einer oder mehreren der zuvor beschriebenen Ausführungsformen auf. Ferner weist die Leistungsversorgungsvorrichtung eine elektrische Schnittstelle auf, die eingerichtet ist, um mit einer Energiespeichervorrichtung zum vorzugsweise bidirektionalen Laden verbunden zu werden. In Zusammenhang mit der Leistungsversorgungsvorrichtung ergeben sich insbesondere die Vorteile, die bereits in Zusammenhang mit dem Verfahren, der Abschaltsteuervorrichtung und der Abschalteinrichtung erläutert wurden.

Gemäß einer Weiterbildung der Erfindung ist vorgesehen, dass die Abschaltsteuervorrichtung in eine Steuervorrichtung der Leistungsversorgungsvorrichtung integriert ist. Alternativ ist vorgesehen, dass die Abschaltsteuervorrichtung als Steuervorrichtung der Leistungsversorgungsvorrichtung ausgebildet ist. Alternativ ist Abschaltsteuervorrichtung separat von der Steuervorrichtung der Leistungsversorgungsvorrichtung angeordnet, vorzugsweise aber mit dieser wirkverbunden.

In einer Ausführungsform - wenn die Abschaltsteuervorrichtung in eine Steuervorrichtung der Leistungsversorgungsvorrichtung integriert ist oder die Abschaltsteuervorrichtung als Steuervorrichtung der Leistungsversorgungsvorrichtung ausgebildet ist - ist die Steuervorrichtung mit der Abschaltanordnung steuerungswirkverbunden. Optional ist die Steuervorrichtung mit der Erfassungsvorrichtung wirkverbunden, um Daten der Datenübertragung zu empfangen. Insbesondere ist die Abschaltanordnung eingerichtet, um das Unterbrechungssignal der Steuervorrichtung zu empfangen und daraufhin den Leistungsstromkreis zu unterbrechen.

In einer anderen Ausführungsform - wenn die Abschaltsteuervorrichtung separat von der Steuervorrichtung angeordnet ist, die Leistungsversorgungsvorrichtung also eine Abschalteinrichtung aufweist, also insbesondere damit nachgerüstet ist - ist die Abschaltsteuervorrichtung mit der Abschaltanordnung steuerungswirkverbunden. Optional ist die Abschaltsteuervorrichtung mit der Erfassungsvorrichtung wirkverbunden, um Daten der Datenübertragung zu empfangen. Insbesondere ist die Abschaltanordnung eingerichtet, um das Unterbrechungssignal der Steuervorrichtung zu empfangen und daraufhin den Leistungsstromkreis zu unterbrechen.

Gemäß einer Weiterbildung der Erfindung ist vorgesehen, dass die Erfassungsvorrichtung an einer Leitung, einem Ladekabel, das die Leistungsversorgungsvorrichtung mit der Energiespeichervorrichtung verbindet, der Leistungselektronik, der elektrischen Schnittstelle und/oder an der Steuervorrichtung, insbesondere zum Erfassen, angeordnet ist.

In einer Ausführungsform ist die Abschaltanordnung, insbesondere das erste Leistungshalbleiter-Bauteil und das zweite Leistungshalbleiter-Bauteil, elektrisch in Reihe mit einer an die Leistungsversorgungsvorrichtung anschließbaren Energiespeichervorrichtung in einem Leistungsstromkreis der Leistungsversorgungsvorrichtung eingebaut.

Die Erfindung wird im Folgenden anhand der Zeichnung näher erläutert. Dabei zeigen:
- Figur 1: eine schematische Darstellung eines Ausführungsbeispiels einer Leistungsversorgungsvorrichtung,
- Figur 2: eine schematische Darstellung eines Prozessablaufdiagramms eines Ausführungsbeispiels eines Verfahrens zum Betreiben der elektrischen Leistungsversorgungsvorrichtung 1 gemäß Figur 1,
- Figur 3: eine schematische Darstellung eines Ladestromstärkeverlaufs eines störungsfreien Ladevorgangs, der mit einem ersten Ausführungsbeispiel des Verfahrens gemäß Figur 2 überwacht wird,
- Figur 4: eine schematische Darstellung eines Ladestromstärkeverlaufs eines gestörten Ladevorgangs, der mit dem ersten Ausführungsbeispiel des Verfahrens gemäß Figur 2 überwacht wird,
- Figur 5: eine schematische Darstellung eines Ladestromstärkeverlaufs eines störungsfreien Ladevorgangs, der mit einem zweiten Ausführungsbeispiel des Verfahrens gemäß Figur 2 überwacht wird, und
- Figur 6: eine schematische Darstellung eines Ladestromstärkeverlaufs eines gestörten Ladevorgangs, der mit dem zweiten Ausführungsbeispiel des Verfahrens gemäß Figur 2 überwacht wird.

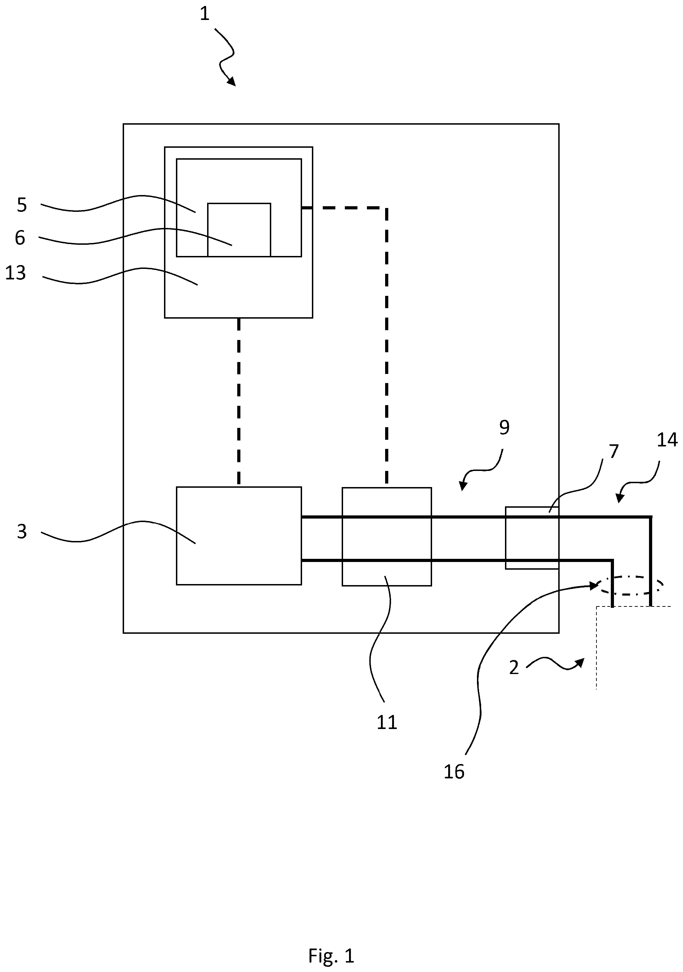

**Fig. 1** zeigt eine schematische Darstellung eines Ausführungsbeispiels einer Leistungsversorgungsvorrichtung 1 zum Laden insbesondere einer Energiespeichervorrichtung 2, insbesondere eines Batteriespeichers eines Elektrofahrzeugs.

Die Leistungsversorgungsvorrichtung 1 umfasst eine Leistungselektronik 3, eine Abschaltsteuervorrichtung 5 und eine elektrische Schnittstelle 7. Die Leistungselektronik 3 ist eingerichtet, um - gesteuert von einer Steuervorrichtung 13 - einen Leistungsstromkreis 9 zum Laden einer Energiespeichervorrichtung 2 wahlweise zu schließen oder zu öffnen. Die elektrische Schnittstelle 7 ist eingerichtet, um mit der Energiespeichervorrichtung 2 zum Laden der Energiespeichervorrichtung 2 verbunden zu werden. Vorliegend ist die elektrische Schnittstelle 7 mittels eines Ladekabels 14 mit der Energiespeichervorrichtung 2 verbunden.

Die Leistungsversorgungsvorrichtung 1 weist ferner eine Abschaltanordnung 11 auf. Die Abschaltsteuervorrichtung 5 ist eingerichtet, um mit dem Leistungsstromkreis 9 der Leistungsversorgungsvorrichtung 1 - vermittelt über die Abschaltanordnung 11 - wirkverbunden zu werden und um den Leistungsstromkreis 9 zu unterbrechen. Hierzu ist die Abschaltsteuervorrichtung 5 mit der Abschaltanordnung 11 steuerungswirkverbunden. Die Abschaltanordnung 11 ist wiederum eingerichtet, um ein Unterbrechungssignal der Abschaltsteuervorrichtung 5 zu empfangen und daraufhin den Leistungsstromkreis 9 zu unterbrechen.

Die Abschaltsteuervorrichtung 5 ist in eine Steuervorrichtung 13 der Leistungsversorgungsvorrichtung 1 integriert oder als Steuervorrichtung 13 der Leistungsversorgungsvorrichtung 1 ausgebildet. Die Abschaltsteuervorrichtung 5 ist eingerichtet, um mit einer Erfassungsvorrichtung 6 wirkverbunden zu werden. Ferner ist die Abschaltsteuervorrichtung 5 eingerichtet, um von der Erfassungsvorrichtung 6 - direkt und/oder indirekt - erfasste Daten einer Datenübertragung zwischen der Leistungsversorgungsvorrichtung 1 und der Energiespeichervorrichtung 2 zu empfangen.

In einem nicht dargestellten Ausführungsbeispiel weist die Leistungsversorgungsvorrichtung 1 eine insbesondere nachgerüstete Abschalteinrichtung auf. Die Abschalteinrichtung weist die Abschaltanordnung 11 auf, die eingerichtet ist, um den Leistungsstromkreis 9 zu unterbrechen. Ferner weist die Abschalteinrichtung die von der Steuervorrichtung 13 verschiedene Abschaltsteuervorrichtung 5 auf, die mit der Abschaltanordnung 11 zu deren Ansteuerung wirkverbunden ist. Optional weist die Abschalteinrichtung die Erfassungsvorrichtung 6 auf. Die Erfassungsvorrichtung 6 kann die Datenübertragung ohne eine galvanische Verbindung zu einem Datenübertragungsweg selbst erfassen - also quasi die Datenübertragung insbesondere elektrisch kontaktlos, insbesondere galvanisch entkoppelt, insbesondere induktiv, abhören. Dies erfolgt vorzugsweise an einer Leitung oder dem Ladekabel 14, beispielsweise - wie hier gestrichelt angedeutet - mit einem vorzugsweise induktiven Datenschnüffler 16 als der Erfassungsvorrichtung 6.

Die Leistungsversorgungsvorrichtung 1 und die Abschaltsteuervorrichtung 5 sind insbesondere eingerichtet zur Durchführung eines im Folgenden näher beschriebenen Verfahrens zum Betreiben der elektrischen Leistungsversorgungsvorrichtung 1.

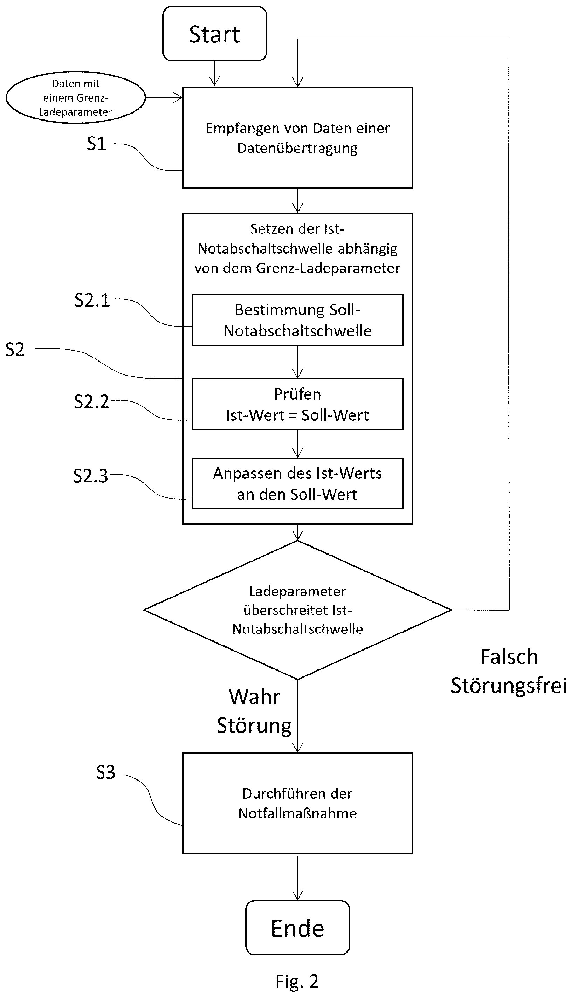

**Fig. 2** zeigt eine schematische Darstellung eines Prozessablaufdiagramms eines Ausführungsbeispiels eines Verfahrens zum Betreiben der elektrischen Leistungsversorgungsvorrichtung 1 gemäß Figur 1 zum Laden der Energiespeichervorrichtung 2.

Gleiche und funktionsgleiche Elemente sind in allen Figuren mit gleichen Bezugszeichen versehen, sodass insofern jeweils auf die vorangegangene Beschreibung verwiesen wird.

In dem Verfahren werden in einem ersten Schritt **S1** während eines Ladevorgangs Daten einer Datenübertragung zwischen der Leistungsversorgungsvorrichtung 1 und der Energiespeichervorrichtung 2 empfangen. Die Daten enthalten zumindest einen für den Ladevorgang charakteristischen Grenz-Ladeparameter. In einem zweiten Schritt **S2** wird abhängig von dem zumindest einen Grenz-Ladeparameter eine Ist-Notabschaltschwelle der Leistungsversorgungsvorrichtung 1 für einen Ladeparameter gesetzt. Wenn der Ladeparameter die Ist-Notabschaltschwelle überschreitet, wird in einem dritten Schritt **S3** eine Notfallmaßnahme durchgeführt, insbesondere um die Leistungsversorgungsvorrichtung 1 und/oder die Energiespeichervorrichtung 2 vor einer Beschädigung zu schützen. Als Notfallmaßnahme wird ein Leistungsstromkreis 9 der Leistungselektronik 3, insbesondere der Leistungsversorgungsvorrichtung 1 und/oder der Energiespeichervorrichtung 2, unterbrochen, insbesondere derart, dass der Ladevorgang unterbrochen wird.

Dabei kann bevorzugt ein Ladestrom von der Leistungsversorgungsvorrichtung 1 zur Energiespeichervorrichtung 2 und umgekehrt - was als bidirektionales Laden bekannt ist - überwacht werden.

Die Ist-Notabschaltschwelle im zweiten Schritt S2 wird gesetzt, indem in einem ersten zweiten Schritt **S2.1** des zweiten Schritts S2 abhängig von dem zumindest einen Grenz-Ladeparameter eine Soll-Notabschaltschwelle der Leistungsversorgungsvorrichtung 1 für den Ladeparameter bestimmt wird. In einem zweiten zweiten Schritt **S2.2** des zweiten Schritts S2 wird geprüft, ob ein aktueller Ist-Wert der Ist-Notabschaltschwelle der Leistungsversorgungsvorrichtung 1 gleich einem Soll-Wert der Soll-Notabschaltschwelle ist, insbesondere den gleichen Wert aufweist. Wenn der aktuelle Ist-Wert nicht gleich dem Soll-Wert ist, insbesondere nicht den gleichen Wert aufweist, wird in einem dritten zweiten Schritt **S2.3** des zweiten Schritts S2 die Ist-Notabschaltschwelle angepasst, sodass ein neuer Ist-Wert der Ist-Notabschaltschwelle gleich dem Soll-Wert ist, insbesondere den gleichen Wert aufweist.

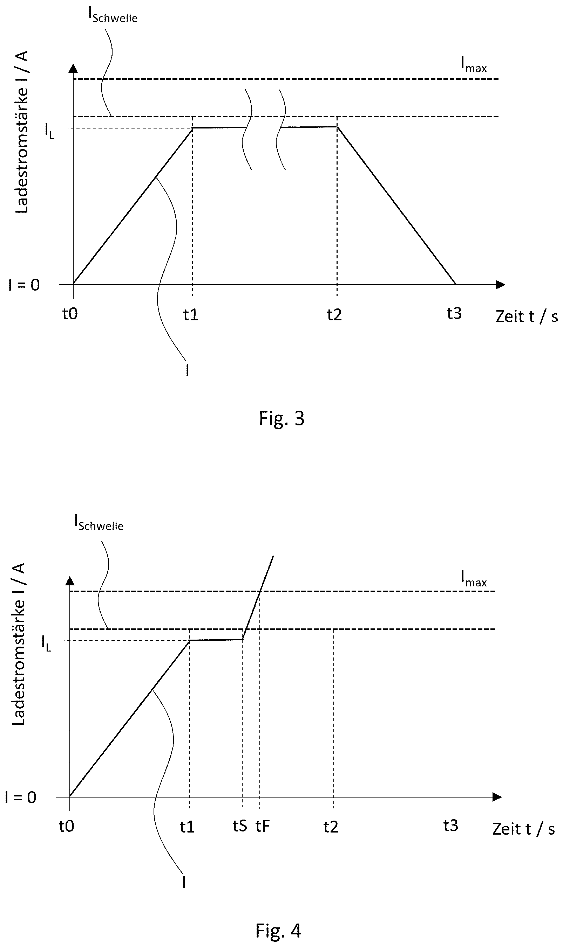

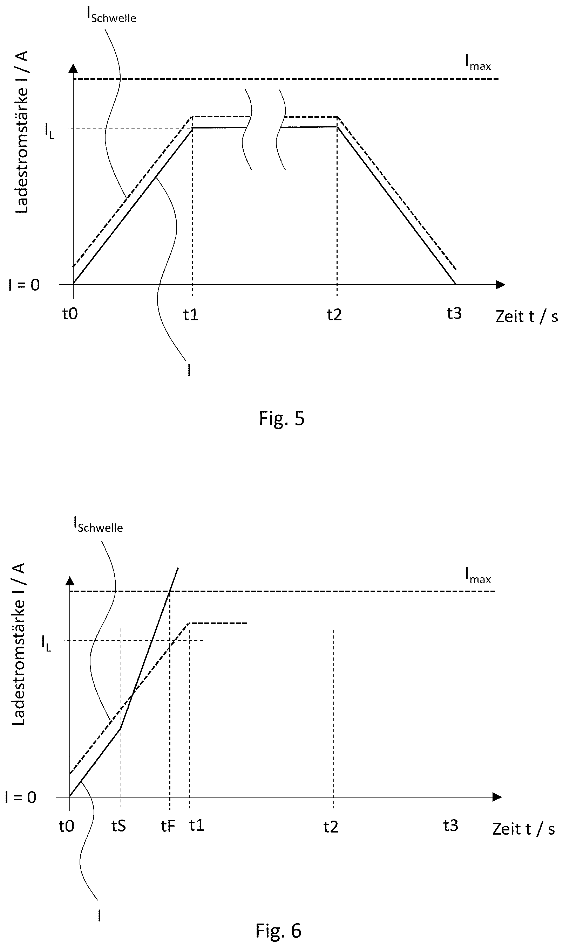

Bevorzugt wird das Verfahren oder zumindest ein Schritt des Verfahrens wiederholt, insbesondere zyklisch, insbesondere mit einer Frequenz von 10 kHz bis 50 kHz. Insbesondere wird die Ist-Notabschaltschwelle einmal zu Beginn des Ladevorgangs gesetzt (vgl. Figuren 3 und 4 - erstes Ausführungsbeispiel -). Alternativ oder zusätzlich wird die Ist-Notabschaltschwelle wiederholt, insbesondere zyklisch während des Ladevorgangs gesetzt (vgl. Figuren 5 und 6 - zweites Ausführungsbeispiel -).

**Figur 3** zeigt eine schematische Darstellung eines Ladestromstärkeverlauf eines störungsfreien Ladevorgangs, der mit dem ersten Ausführungsbeispiel des Verfahrens gemäß Figur 2 überwacht wird.

Bei diesem zweiten Ausführungsbeispiel des Verfahrens wird die Ist-Notabschaltschwelle nur einmal zu Beginn des Ladevorgangs auf einen konstanten Wert gesetzt. Hierzu werden jedenfalls zu Beginn des Ladevorgangs Daten der Datenübertragung zwischen der Leistungsversorgungsvorrichtung 1 und der Energiespeichervorrichtung 2 empfangen, wobei die Daten zumindest einen für den Ladevorgang charakteristischen Grenz-Ladeparameter enthalten. Vorliegend ist als der Grenz-Ladeparameter eine maximale Ladestromstärke Iₘₐₓ der Energiespeichervorrichtung gewählt.

Das Diagramm zeigt einen Ladestromstärkenverlauf eines störungsfreien Ladevorgangs, bei dem die Leistungsversorgungsvorrichtung 1 von der Energiespeichervorrichtung 2 aufgeladen wird. Alternativ kann die Energiespeichervorrichtung 2 - vermittelt über die Leistungsversorgungsvorrichtung 1 - beispielsweise auch ein Stromnetz unterstützen oder stabilisieren.

In dem Diagramm ist eine Ladestromstärke I in Ampere (A) über der Zeit t in Sekunden (s) aufgetragen. Zu einem Start-Zeitpunkt t0 beginnt der Ladevorgang und die Ladestromstärke I - als Ladeparameter - wird beginnend bei 0 A erhöht, bis bei einem ersten Zeitpunkt t1 eine vorbestimmte Ladestromstärke I_{L} erreicht ist. Zwischen den Zeitpunkten t0 und t1 wird die Ladestromstärke I über die Zeit beispielhaft linear erhöht. Es ist auch denkbar, dass die Ladestromstärke I nichtlinear, beispielsweise progressiv erhöht wird. Zwischen dem ersten Zeitpunkt t1 und einem zweiten Zeitpunkt t2 wird die Leistungsversorgungsvorrichtung 1 mit der konstanten Ladestromstärke I_{L} geladen. Ab dem zweiten Zeitpunkt t2 wird die Ladestromstärke I verringert, bis bei einem dritten Zeitpunkt t3 der Ladevorgang abgeschlossen ist. Zwischen den Zeitpunkten t2 und t3 wird die Ladestromstärke I über die Zeit beispielhaft linear verringert. Es ist auch hier denkbar, dass die Ladestromstärke I nichtlinear, beispielsweise regressiv verringert wird. Der Ladevorgang zwischen den Zeitpunkten t1 und t2 dauert üblicherweise deutlich länger - mehrere Minuten bis Stunden -, als das Erhöhen und Verringern der Ladestromstärke I, welches üblicherweise wenige Sekunden bis zu einer Minute dauert.

In diesem ersten Ausführungsbeispiel empfängt die Leistungsversorgungsvorrichtung 1 die Daten der Datenübertragung, die die Information enthalten, dass die maximale Ladestromstärke Iₘₐₓ der Energiespeichervorrichtung 2 - als Grenz-Ladeparameter - einen bestimmten Maximalwert beträgt. Wird dieser überschritten, wird die Sicherung der Energiespeichervorrichtung 2 ausgelöst. Beispielsweise wäre dann ein Elektrofahrzeug nicht mehr fahrtüchtig. Abhängig von der maximalen Ladestromstärke Iₘₐₓ wird die Ist-Notabschaltschwelle - als Ladestromstärkeschwelle I_{Schwelle} - für den Ladeparameter gesetzt und zwar derart, dass die Ist-Notabschaltschwelle betragsmäßig kleiner als die maximale Ladestromstärke Iₘₐₓ ist.

Bei allen Zeitpunkten dieses Ladevorgangs ist der Ladeparameter - die Ladestromstärke I - kleiner als die Ist-Notabschaltschwelle - die Ladestromstärkeschwelle I_{Schwelle}. Solange der Ladeparameter kleiner ist als die Ist-Notabschaltschwelle, wird keine Notfallmaßnahme durchgeführt.

**Figur 4** zeigt eine schematische Darstellung eines Ladestromstärkeverlaufs eines gestörten Ladevorgangs, der mit dem ersten Ausführungsbeispiel des Verfahrens gemäß Figur 2 überwacht wird.

Das Diagramm von Figur 4 entspricht dem Diagramm von Figur 3, mit dem Unterschied, dass der Ladevorgang hier nicht störungsfrei abläuft. Zum Störungszeitpunkt tS wird die Leistungsversorgungsvorrichtung 1 aufgrund eines Fehlers kurzgeschlossen. Der Ladeparameter steigt steil an.

Bei Verwendung einer Leistungsversorgungsvorrichtung 1 des Stands der Technik würde die Störung dazu führen, dass die Ladestromstärke I so lange und so weit ansteigen kann, dass bei einem Fehlerzeitpunkt tF die maximale Ladestromstärke Iₘₐₓ der Energiespeichervorrichtung der Sicherung der Energiespeichervorrichtung 2 überschritten wird. Handelt es sich bei der Energiespeichervorrichtung 2 um eine Batterie eines Elektrofahrzeugs, wäre das Elektrofahrzeug ab dem Fehlerzeitpunkt tF nicht mehr funktionsfähig.

Bei Durchführung des vorliegenden Verfahrens kann dies verhindert werden. Da die Ist-Notabschaltschwelle unterhalb der maximalen Ladestromstärke Iₘₐₓ der Energiespeichervorrichtung gesetzt ist, kann bereits vor dem Erreichen der maximalen Ladestromstärke Iₘₐₓ der Energiespeichervorrichtung die Notfallmaßnahme durchgeführt werden und der Leistungsstromkreis 9 der Leistungselektronik 3, insbesondere der Leistungsversorgungsvorrichtung 1 oder der Energiespeichervorrichtung 2, unterbrochen werden, insbesondere derart, dass der Ladevorgang unterbrochen wird. Der Leistungsstromkreis 9 der Leistungselektronik 3 wird dabei zeitlich derart früh unterbrochen, dass die Sicherung der Energiespeichervorrichtung 2 der Störung des Ladevorgangs gar nicht ausgesetzt wird, insbesondere die Sicherung also nicht ausgelöst wird. Handelt es sich bei der Energiespeichervorrichtung 2 um eine Batterie eines Elektrofahrzeugs, wäre das Elektrofahrzeug weiterhin funktionsfähig.

**Figur 5** zeigt eine schematische Darstellung eines Ladestromstärkeverlaufs eines störungsfreien Ladevorgangs, der mit dem zweiten Ausführungsbeispiel des Verfahrens gemäß Figur 2 überwacht wird.

Bei diesem zweiten Ausführungsbeispiel des Verfahrens wird die Ist-Notabschaltschwelle - als Ladestromstärkeschwelle I_{Schwelle} - wiederholt, insbesondere zyklisch gesetzt. Vorliegend ist - im Gegensatz zu dem Grenz-Ladeparameter in den Figuren 3 und 4 - als der Grenz-Ladeparameter eine momentane Stromstärkeanforderung der Energiespeichervorrichtung 2 gewählt. Das Diagramm von Figur 5 entspricht im Übrigen dem Diagramm von Figur 3.

Dass die Ist-Notabschaltschwelle wiederholt und abhängig von der momentanen Stromstärkeanforderung gesetzt wird, führt dazu, dass die Ist-Notabschaltschwelle einem Verlauf des Ladeparameters folgt. Zu erkennen ist dies insbesondere zwischen den Zeitpunkten t0 und t1 sowie t2 und t3.

Bei allen Zeitpunkten dieses Ladevorgangs ist der Ladeparameter - die Ladestromstärke I - kleiner als die Ist-Notabschaltschwelle - die Ladestromstärkeschwelle I_{Schwelle}. Solange der Ladeparameter kleiner ist als die Ist-Notabschaltschwelle, wird keine Notfallmaßnahme durchgeführt.

**Figur 6** zeigt eine schematische Darstellung eines Ladestromstärkeverlaufs eines gestörten Ladevorgangs, der mit dem zweiten Ausführungsbeispiel des Verfahrens gemäß Figur 2 überwacht wird.

Das Diagramm von Figur 6 entspricht dem Diagramm von Figur 5, mit dem Unterschied, dass der Ladevorgang hier nicht störungsfrei abläuft. Zum Störungszeitpunkt tS - der hier im Gegenzug zu Figur 4 zwischen den Zeitpunkten t0 und t1 liegt - wird die Leistungsversorgungsvorrichtung 1 aufgrund eines Fehlers kurzgeschlossen. Der Ladeparameter steigt steil an.

Bei Verwendung einer Leistungsversorgungsvorrichtung 1 des Stands der Technik würde die Störung ebenfalls dazu führen, dass die Ladestromstärke I so lange und so weit ansteigen kann, dass bei einem Fehlerzeitpunkt tF die maximale Ladestromstärke Iₘₐₓ der Sicherung der Energiespeichervorrichtung 2 - als Grenz-Ladeparameter - überschritten wird. Handelt es sich bei der Energiespeichervorrichtung 2 um eine Batterie eines Elektrofahrzeugs, wäre das Elektrofahrzeug ab dem Fehlerzeitpunkt tF nicht mehr funktionsfähig.

Bei Durchführung des vorliegenden Verfahrens kann dies verhindert werden. Die Ist-Notabschaltschwelle wird abhängig von der momentanen Stromstärkeanforderung wiederholt gesetzt, wobei sich die momentane Stromstärkeanforderung zeitlich verändern kann, beispielsweise beim Beginn und Ende des Ladevorgangs. Die Ist-Notabschaltschwelle ist somit flexibel oder dynamisch, das heißt insbesondere während des Ladevorgangs zeitlich veränderlich. Da diese nur knapp oberhalb der momentanen Stromstärkeanforderung gesetzt ist, kann bereits lange vor dem Erreichen der maximalen Ladestromstärke Iₘₐₓ der Energiespeichervorrichtung die Notfallmaßnahme durchgeführt werden und der Leistungsstromkreis 9 der Leistungselektronik 3, insbesondere der Leistungsversorgungsvorrichtung 1 oder der Energiespeichervorrichtung 2, unterbrochen werden, insbesondere derart, dass der Ladevorgang unterbrochen wird. Der Leistungsstromkreis 9 der Leistungselektronik 3 wird dabei zeitlich derart früh unterbrochen, dass die Sicherung der Energiespeichervorrichtung 2 der Störung des Ladevorgangs gar nicht ausgesetzt wird, insbesondere die Sicherung also nicht ausgelöst wird. Handelt es sich bei der Energiespeichervorrichtung 2 um eine Batterie eines Elektrofahrzeugs, wäre das Elektrofahrzeug weiterhin funktionsfähig.

## Patentansprüche

1. Verfahren zum Betreiben einer elektrischen Leistungsversorgungsvorrichtung (1) zum uni- oder bidirektionalen Laden einer Energiespeichervorrichtung (2), wobei
- während eines Ladevorgangs Daten einer Datenübertragung zwischen der Leistungsversorgungsvorrichtung (1) und der Energiespeichervorrichtung (2) empfangen werden, wobei die Daten zumindest einen für den Ladevorgang charakteristischen Grenz-Ladeparameter enthalten, wobei
- abhängig von dem zumindest einen Grenz-Ladeparameter eine Ist-Notabschaltschwelle der Leistungsversorgungsvorrichtung (1) für einen Ladeparameter gesetzt wird, wobei
- wenn der Ladeparameter die Ist-Notabschaltschwelle überschreitet, eine Notfallmaßnahme durchgeführt wird, um die Leistungsversorgungsvorrichtung (1) und/oder die Energiespeichervorrichtung (2) vor einer Beschädigung zu schützen.

2. Verfahren nach Anspruch 1, wobei
- die Ist-Notabschaltschwelle gesetzt wird, indem abhängig von dem zumindest einen Grenz-Ladeparameter eine Soll-Notabschaltschwelle der Leistungsversorgungsvorrichtung (1) für den Ladeparameter bestimmt wird, wobei
- geprüft wird, ob ein aktueller Ist-Wert der Ist-Notabschaltschwelle der Leistungsversorgungsvorrichtung (1) gleich einem Soll-Wert der Soll-Notabschaltschwelle ist, wobei,
- wenn der aktuelle Ist-Wert nicht gleich dem Soll-Wert ist, die Ist-Notabschaltschwelle angepasst wird, sodass ein neuer Ist-Wert der Ist-Notabschaltschwelle gleich dem Soll-Wert ist.

3. Verfahren nach einem der vorhergehenden Ansprüche, wobei als Notfallmaßnahme ein Leistungsstromkreis (9) einer Leistungselektronik (3), insbesondere der Leistungsversorgungsvorrichtung (1) und/oder der Energiespeichervorrichtung (2), unterbrochen wird.

4. Verfahren nach einem der vorhergehenden Ansprüche, wobei der Grenz-Ladeparameter ausgewählt ist aus einer Gruppe, bestehend aus: Einer maximalen Ladeleistung der Leistungsversorgungsvorrichtung (1), einer maximalen Ladeleistung der Energiespeichervorrichtung (2), einer maximalen Ladespannung der Leistungsversorgungsvorrichtung (1), einer maximalen Ladespannung der Energiespeichervorrichtung (2), einer maximalen Ladestromstärke der Leistungsversorgungsvorrichtung (1), einer maximalen Ladestromstärke der Energiespeichervorrichtung (2), einer momentanen Leistungsanforderung der Energiespeichervorrichtung (2), einer momentanen Leistungsanforderung der Leistungsversorgungsvorrichtung (1), einer momentanen Spannungsanforderung der Energiespeichervorrichtung (2), einer momentanen Spannungsanforderung der Leistungsversorgungsvorrichtung (1), einer momentanen Stromstärkeanforderung der Energiespeichervorrichtung (2), einer momentanen Stromstärkeanforderung der Leistungsversorgungsvorrichtung (1), einem momentanen Ladeleistungsgradienten, einem momentanen Ladespannungsgradienten und einem momentanen Ladestromstärkegradienten.

5. Verfahren nach einem der vorhergehenden Ansprüche, wobei
- die Ist-Notabschaltschwelle zusätzlich abhängig von einem ersten Toleranzwert gesetzt wird, wobei
- der erste Toleranzwert charakteristisch ist für eine Toleranz des Ladevorgangs, insbesondere des Ladeparameters.

6. Verfahren nach einem der vorhergehenden Ansprüche, wobei
- die Daten der Datenübertragung zwischen der Leistungsversorgungsvorrichtung (1) und der Energiespeichervorrichtung (2) mittels einer Erfassungsvorrichtung (6) erfasst werden.

7. Verfahren nach einem der vorhergehenden Ansprüche, wobei
- die Daten an einer Leitung, einem Ladekabel (14), das die Leistungsversorgungsvorrichtung (1) mit der Energiespeichervorrichtung (2) verbindet, einer Leistungselektronik (3), einer elektrischen Schnittstelle (7) und/oder an einer Steuervorrichtung (13) der Leistungsversorgungsvorrichtung (1) erfasst werden.

8. Abschaltsteuervorrichtung (5) für eine Leistungsversorgungsvorrichtung (1) zum uni- oder bidirektionalen Laden einer Energiespeichervorrichtung (2), wobei die Abschaltsteuervorrichtung (5) eingerichtet ist, um ein Verfahren nach einem der vorhergehenden Ansprüche durchzuführen.

9. Abschaltsteuervorrichtung (5) nach Anspruch 8, wobei
- die Abschaltsteuervorrichtung (5) eingerichtet ist, um mit einer Erfassungsvorrichtung (6) wirkverbunden zu werden, und um
- von der Erfassungsvorrichtung (6) erfasste Daten einer Datenübertragung zwischen der Leistungsversorgungsvorrichtung (1) und der Energiespeichervorrichtung (2) zu empfangen.

10. Abschaltsteuervorrichtung (5) nach Anspruch 8 oder 9, wobei
- die Abschaltsteuervorrichtung (5) eingerichtet ist, um mit einem Leistungsstromkreis (9) der Leistungsversorgungsvorrichtung (1) wirkverbunden zu werden und um den Leistungsstromkreis (9) zu unterbrechen.

11. Abschaltsteuervorrichtung (5) nach einem der Ansprüche 8 bis 10, wobei
- die Abschaltsteuervorrichtung (5) durch eine Steuervorrichtung (13) der Leistungsversorgungsvorrichtung (1) gebildet ist.

12. Abschalteinrichtung, insbesondere zum Nachrüsten an einer Leistungsversorgungsvorrichtung (1) zum uni- oder bidirektionalen Laden einer Energiespeichervorrichtung (2), mit
- einer Abschaltanordnung (11), die eingerichtet ist, um einen Leistungsstromkreis (9) zu unterbrechen, und
- einer mit der Abschaltanordnung (11) zu deren Ansteuerung wirkverbundenen Abschaltsteuervorrichtung (5) nach einem der Ansprüche 8 bis 11, wobei optional
- die Abschalteinrichtung eine Erfassungsvorrichtung (6) zur Erfassung von mindestens einem für einen Ladevorgang charakteristischen Grenz-Ladeparameter aufweist, die mit der Abschaltsteuervorrichtung (5) wirkverbunden und eingerichtet ist, um den mindestens einen Grenz-Ladeparameter an die Abschaltsteuervorrichtung (5) zu übermitteln.

13. Leistungsversorgungsvorrichtung (1) zum uni- oder bidirektionalen Laden einer Energiespeichervorrichtung (2), umfassend:
- eine Leistungselektronik (3), die eingerichtet ist, um einen Leistungsstromkreis (9) zum Laden einer Energiespeichervorrichtung (2) wahlweise zu schließen oder zu öffnen;
- eine Abschalteinrichtung nach Anspruch 12 oder eine Abschaltsteuervorrichtung (5) nach einem der Ansprüche 8 bis 11, und
- eine elektrische Schnittstelle (7), die eingerichtet ist, um mit der Energiespeichervorrichtung (2) zum Laden der Energiespeichervorrichtung (2) verbunden zu werden.

14. Leistungsversorgungsvorrichtung (1) nach Anspruch 13, wobei
- die Abschaltsteuervorrichtung (5) in eine Steuervorrichtung (13) der Leistungsversorgungsvorrichtung (1) integriert ist oder als Steuervorrichtung (13) der Leistungsversorgungsvorrichtung (1) ausgebildet ist.

15. Leistungsversorgungsvorrichtung (1) nach Anspruch 13 oder 14, wobei
- die Erfassungsvorrichtung (6) an einer Leitung, einem Ladekabel (14), das die Leistungsversorgungsvorrichtung (1) mit der Energiespeichervorrichtung (2) verbindet, der Leistungselektronik (3), der elektrischen Schnittstelle (7) und/oder an der Steuervorrichtung (13) angeordnet ist.
